# EUROPEAN PATENT APPLICATION

(11) **EP 3 088 251 A1**
(43) Date of publication of application: **02.11.2016**
(21) Application number: 14875557.2
(22) Date of filing: 08.05.2014
(51) Int. Cl.: B60Q 1/56, B60R 13/10

(54) **PLATE FOR THE DISPLAY OF CHARACTERS**

(30) Priority: 23.12.2013 ES 201301109
(71) Applicant: Llamas Gomez, Manuel David, 11393 Zahara de los Atunes (Cádiz) (ES)
(72) Inventor: Llamas Gomez, Manuel David, 11393 Zahara de los Atunes (Cádiz) (ES)
(74) Representative: Garcia-Cabrerizo y del Santo, Pedro Maria
(86) International application number: PCT/ES2014/000072
(87) International publication number: WO 2015/097320

(57) **Abstract**

The invention relates to a plate for the display of characters, presenting characters (numbers, letters, figures, etc.) which are blanked, defining punch-holes which delimit the contour thereof, and where the plate (1) has, on the rear part thereof, a group of LEDs (3) which are preferably attached to, and immobilised on, a support (4), such that said LEDs (3) preferably face the blanks defining the characters of the plate.

## Description

### Object of the invention

The present invention relates to a plate for the display of characters intended for application in vehicle license plates, traffic signs or the like, with the purpose of making the numbers on such plate clearly visible.

The plate is also applicable to other types of signs for the display of the corresponding indicators provided therein. It can be used, for example, in rail transport, air transport, leisure boats, merchant ships, vehicles of two and four wheels, signs on billboards, restaurants, shops, awnings, etc.

### Background of the invention

As it is known, vehicle license plates, and even traffic signs, are preferably and mainly made of sheets of metal that, in the case of license plates, are rectangular and have the corresponding numbers and letters of the vehicle registration stamped on it, in a way such that the visible surface of the plate is reflective, while the numbers and letters are visible as they do not have such reflective surface, so that the contour thereof is perfectly defined and therefore visible to the viewer, always taking into account that the color of the numbers and letters is different from the reflective surface of the plates or the like.

This signaling system has the disadvantage that sometimes the numbers and/or letters deteriorate by friction, due to the use of low quality paint or paint without the required characteristics or because of the weather conditions, and thus those numbers and letters become illegible.

Obviously, the deterioration of the numbers and letters on the license plates makes it impossible for traffic wardens and recording cameras to determine the real vehicle registration, with the problems or inconveniences resulting therefrom. It must also be taken into account that the display at night for identification of license plates requires their illumination, and nowadays only the rear plate includes illumination means and in a tangential form.

Similar disadvantages are found in cases where the plates for display have other applications.

### Description of the invention

The plate for the display of characters of the present invention has been conceived to solve the aforementioned problems based on a simple but effective solution. More specifically, the plate of the invention presents the particularity that the characters provided therein (numbers, letters, figures...) are blanked, defining punch-holes which delimit the contour thereof. These characters are arranged to be viewed from the front part of the plate.

The plate also comprises a light source located on the rear part thereof, so as to provide illumination that passes through the blanked characters, thus defining the same.

The light source preferably consists of a group of light-emitting diodes (hereinafter, LEDs).

The illumination source is attached to a support provided on the rear part of the plate. Said source, consisting, for instance, of a group of LEDs, is arranged in a way such that is placed facing the blanked characters or at the edges of the support and directed towards the blanked characters.

The support to which the light source is fixed can be attached to the plate either fixedly or detachably. The advantage of a detachable support is that it allows changing the light emitters in case that the same are damaged or fused.

In the case of a fixed support, the same preferably consists of an adhesive silicone layer in which the LEDs or the corresponding light source are embedded and which is attached to the rear face of the plate.

The plate having the corresponding blanked characters can be of metal, methacrylate, acrylic resin, PVC, polycarbonate, etc.

The support of the LEDs which is placed on the rear part of the plate can also be of different materials, preferably translucent or transparent. As an example, the support may be of silicone, methacrylate, polycarbonate or acrylic resin.

If the plate is used in vehicles, the power supply is electrically powered by the vehicle itself.

Preferably, in the case of a vehicle license plate, the light emitters which are mounted on the front license plate will emit white light, while those on the rear license plate will provide or emit red light, without this being a limiting or determining factor in its obligation, as the colors may be the necessary ones in each case in accordance with the traffic regulations of each country and each moment.

The present invention is equally applicable to traffic signs, rail transport, air transport, leisure boats, merchant ships, vehicles of two and four wheels, signs such as billboards, restaurants, shops, etc, and the light emitters can be fed in the most convenient way, either through electricity networks, either through the energy supplied by photovoltaic panels, batteries, etc.

### Description of the drawings

To complete the description of the invention and with the purpose of facilitating the comprehension of its characteristics, a set of figures is attached as an integral part of the description of the invention, representing the following in an illustrative rather than limitative manner:
Figure 1 shows a front representation of a vehicle license plate made in accordance with the object of the present invention.
Figure 2 shows a section view of the plate shown in the previous figure.
Figure 3 shows a front representation of the present invention for application to a leisure boat.
Figure 4 shows a view of the support where the LEDs are embedded in a completely tight manner.

The references in the figures are the following:
1.- Plate
2.- Characters
3.- Light source (LEDs)
4.- Support for the LEDs

### Preferred embodiment of the invention

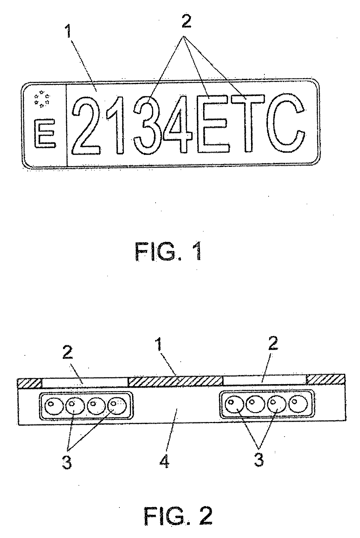

As seen in the figures, the plate for the display of characters and/or traffic signs of the present invention, either a vehicle license plate as shown in Figure 1 or a traffic sign or any other conventional signaling element, is made by a plate (1) having the particularity that the characters (2), both numbers or letters, are blanked, that is, perforated, so that their display is performed by LEDs (3) which are located behind the plate (1) and facing those perforated or blanked characters (2). The LEDs (3) are attached to, and immobilised on, a support (4) (see Figure 2) which can be fixed or detachable. In a particular embodiment, the support (4) consists of an adhesive silicone layer properly affixed to the rear part of the plate (1) so that by the appropriate electrical embedding of the LEDs (3) illumination of the blanks, and ultimately of the characters (2) corresponding to the license plate (1) in question, will be achieved.

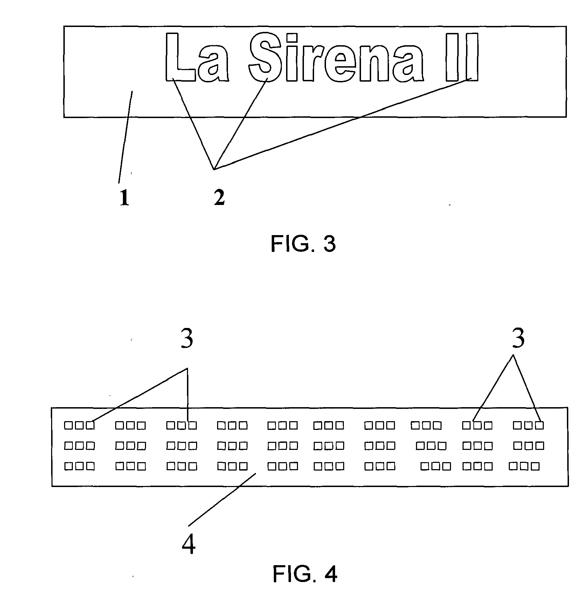

Figure 3 shows another example of the plate described herein for application to a leisure boat. As in Figure 1, the characters (2) of the plate (1) are blanked, that is, perforated. To display these characters, the plate (1) has on its rear part a group of LEDs (3) attached to and immobilised on a support (4).

Figure 4 shows an example of a support (4) where the LEDs (3) are embedded. Said support (4) would be placed on the rear part of the plate (1).

As it is evident by means of the proposed system, the characters (2) cannot be erased or damaged since their contours are blanked.

## Claims

1. Plate for the display of characters **characterized by** comprising:
- blanked characters (2) arranged to be viewed from a front face of the plate (1);
- a light source (3) on the rear face of the plate (1) configured to provide illumination passing through said blanked characters (2).

2. Plate for the display of characters according to claim 1, **characterized in that** the light source (3) is attached to a support (4) provided on the rear face of the plate (1).

3. Plate for the display of characters according to claim 1 or 2, **characterized in that** the light source (3) consists of a group of LEDs.

4. Plate for the display of characters, according to claim 3, **characterized in that** the LEDs are arranged on the support (4) in a way such they are facing the blanked characters (2)

5. Plate for the display of characters, according to claim 3, **characterized in that** the LEDs are arranged on the sides of the support (4) and directed towards the blanked characters (2).

6. Plate for the display of characters according to claim 3, **characterized in that** the LEDs emit red light or white light.

7. Plate for the display of characters, according to claim 2, **characterized in that** the support (4) is attached to the plate (1) in a fixed manner.

8. Plate for the display of characters, according to claim 6, **characterized in that** the support (4) consists of an adhesive silicone layer affixed to the rear part of the plate (1).

9. Plate for the display of characters, according to claim 2, **characterized in that** the support (4) is detachable.

10. Plate for the display of characters according to claim 1, **characterized in that** the plate (1) is made of a material selected from metal, methacrylate, acrylic resin, polycarbonate and PVC.

11. Plate for the display of characters according to claim 2, **characterized in that** the support (4) is made of silicone, methacrylate, polycarbonate or acrylic resin.
